# EUROPÄISCHE PATENTSCHRIFT

(11) **EP 4 343 124 B1**
(45) Veröffentlichungstag und Bekanntmachung des Hinweises auf die Patenterteilung: **01.01.2025**
(21) Anmeldenummer: 23188824.9
(22) Anmeldetag: 01.08.2023
(51) Int. Cl.: F01N 3/20, F01N 3/28, F01N 13/08

(54) **MISCHANORDNUNG FÜR EINE ABGASANLAGE EINER BRENNKRAFTMASCHINE**
MIXING ARRANGEMENT FOR AN EXHAUST SYSTEM OF AN INTERNAL COMBUSTION ENGINE
DISPOSITIF DE MÉLANGE POUR UN SYSTÈME D'ÉCHAPPEMENT D'UN MOTEUR À COMBUSTION INTERNE

(30) Priorität: 25.08.2022 DE 102022121456
(43) Veröffentlichungstag der Anmeldung: 27.03.2024
(73) Patentinhaber: Purem GmbH, 66539 Neunkirchen (DE)
(72) Erfinder: Weinmann, Philipp, Esslingen (DE); Többen, Heike, Uhingen (DE); Rothfuß, Mathias, Waiblingen (DE)
(74) Vertreter: Ruttensperger Lachnit Trossin Gomoll

(56) Entgegenhaltungen:
- EP-A1- 2 314 837
- EP-A1- 3 473 827
- WO-A1-2012/052690
- DE-A1- 102019 205 907

## Beschreibung

Die vorliegende Erfindung betrifft eine Mischanordnung für eine Abgasanlage einer Brennkraftmaschine zur Durchmischung von Abgas und Reaktionsmittel.

Aus der DE 10 2007 000 526 B4 ist eine Abgasanlage einer Brennkraftmaschine bekannt, bei welcher zwischen einem Partikelfilter und einer als SCR-Katalysator ausgebildeten Abgasbehandlungseinheit eine Mischanordnung zur Durchmischung einer als Reaktionsmittel eingesetzten Harnstofflösung mit Abgas angeordnet ist. Die Mischanordnung umfasst ein ein Abgasströmungsvolumen umgrenzendes Abgasrohr und eine Reaktionsmittelabgabeeinheit zur Abgabe der Harnstofflösung in das in dem Abgasrohr strömende Abgas.

Eine Mischanordnung gemäß dem Oberbegriff des Anspruchs 1 ist aus der EP 2 314 837 A1 bekannt. Bei dieser Mischanordnung sind in einer Abgasführungskomponente zwei rohrartige Aufteilkörper ineinander geschachtelt angeordnet. Eine Reaktionsmittelabgabeeinheit ist so positioniert, dass das von dieser abgegebene Reaktionsmittel in ein von dem inneren Aufteilkörper umgebenes Teil-Abgasströmungsvolumen eingeleitet wird, so dass dieses Teil-Abgasströmungsvolumen von Abgas und Reaktionsmittel durchströmt wird. Ein durch den äußeren Aufteilkörper und durch die Abgasführungskomponente begrenztes Teil-Abgasströmungsvolumen wird nur von Abgas durchströmt. Auch in ein zwischen dem inneren Aufteilkörper und dem äußeren Aufteilkörper gebildetes Teil-Abgasströmungsvolumen tritt ausschließlich Abgas ein. Das in dieses Teil-Abgasströmungsvolumen eingeleitete Abgas strömt durch in dem inneren Aufteilkörper gebildete Öffnungen hindurch in das von dem inneren Aufteilkörper umgebende und von Abgas und Reaktionsmittel durchströmte Teil-Abgasströmungsvolumen.

Die WO 2012/052690 A1 offenbart eine Mischanordnung, bei welcher in einer rohrartigen Abgasführungskomponente ein ebenfalls rohrartiger Aufteilkörper angeordnet ist. Ein Reaktionsmittel wird in ein von dem rohrartigen Aufteilkörper umgebenes Teil-Abgasströmungsvolumen eingeleitet. Ein zwischen dem Aufteilkörper und der Abgasführungskomponente gebildetes Teil-Abgasströmungsvolumen wird ausschließlich von Abgas durchströmt.

Die EP 3 473 827 A1 und die DE 10 2019 205 907 A1 offenbaren jeweils eine Mischanordnung, bei welcher durch eine Außenwand und eine in dieser angeordnete Innenwand zwei Teil-Abgasströmungsvolumina begrenzt bzw. voneinander getrennt sind.

Es ist die Aufgabe der vorliegenden Erfindung, eine Mischanordnung für eine Abgasanlage einer Brennkraftmaschine vorzusehen, mit welcher eine verbesserte Vermischung von Abgas und Reaktionsmittel erreicht wird.

Erfindungsgemäß wird diese Aufgabe gelöst durch eine Mischanordnung für eine Abgasanlage einer Brennkraftmaschine zur Durchmischung von Abgas und Reaktionsmittel gemäß Anspruch 1. Die erfindungsgemäße Mischanordnung umfasst:
- eine ein Abgasströmungsvolumen umgrenzende, in Richtung einer Längsachse sich erstreckende Abgasführungskomponente,
- eine Reaktionsmittelabgabeeinheit zur Abgabe von Reaktionsmittel in das Abgasströmungsvolumen,
- stromabwärts der Reaktionsmittelabgabeeinheit, eine Abgasströmungsvolumen-Aufteilanordnung, wobei die Abgasströmungsvolumen-Aufteilanordnung das Abgasströmungsvolumen in einem Aufteil-Längenbereich in eine Mehrzahl von Teil-Abgasströmungsvolumina aufteilt, wobei die Mehrzahl von Teil-Abgasströmungsvolumina ein zentrales Teil-Abgasströmungsvolumen und wenigstens ein das zentrale Teil-Abgasströmungsvolumen ringartig umgebendes Teil-Abgasströmungsvolumen umfasst.

Zum Bereitstellen einer größtmöglichen Oberfläche für die thermische Wechselwirkung mit dem Reaktionsmittel umfasst die Abgasströmungsvolumen-Aufteilanordnung eine Mehrzahl von in der Abgasführungskomponente ineinander geschachtelt angeordneten, rohrartigen Aufteilkörpern.

Durch das Aufteilen des Abgasströmungsvolumens in die Mehrzahl von ineinander geschachtelten bzw. einander umgebenden Teil-Abgasströmungsvolumina vermittels der Abgasströmungsvolumen-Aufteilanordnung wird aufgrund des Umstandes, dass jedes Teil-Abgasströmungsvolumen durch entsprechende Oberflächenbereiche der Abgasströmungsvolumen-Aufteilanordnung umgrenzt ist, in dem Aufteil-Längenbereich eine vergleichsweise große Gesamtoberfläche bereitgestellt, an welcher das im Allgemeinen in Tröpfchenform in den Abgasstrom abgegebene Reaktionsmittel sich niederschlagen bzw. erwärmen kann und dadurch verdampft wird. Da die thermische Wechselwirkung mit dem Reaktionsmittel zur Erwärmung desselben sich somit auf eine großen Gesamtoberfläche verteilt, kühlt die diese Gesamtoberfläche bereitstellende Abgasströmungsvolumen-Aufteilanordnung sich bei der thermischen Wechselwirkung mit dem Reaktionsmittel und der dabei auftretenden Verdampfung nur vergleichsweise wenig ab, was dazu führt, dass bereits bei niedrigeren Temperaturen eine effiziente Reaktionsmittelverdampfung erreicht werden kann und damit auch das Risiko, dass im Bereich des Abgasströmungsvolumens Reaktionsmittelablagerungen entstehen, verringert werden kann. Ferner führt eine verbesserte Verdampfung und damit Durchmischung von Reaktionsmittel mit Abgas dazu, dass in einer Abgasbehandlungseinheit insbesondere zur Verringerung des Stickoxidanteils im Abgas bereits bei niedrigeren Temperaturen eine effiziente Umsetzung erfolgen kann und dadurch der Stickoxidausstoß deutlich gesenkt werden kann.

Für eine einfach zu realisierende und eine effiziente Verdampfung des Reaktionsmittels unterstützende Ausgestaltung wird vorgeschlagen, dass die Abgasführungskomponente wenigstens in dem Aufteil-Längenbereich rohrartig ausgebildet ist oder/und sich in Richtung der Längsachse im Wesentlichen geradlinig erstreckt oder/und wenigstens in dem Aufteil-Längenbereich eine im Wesentlichen kreisförmige Querschnittsgeometrie aufweist.

Auch dabei kann für einen einfach zu realisierenden Aufbau und in Anpassung an eine bevorzugte Formgebung der Abgasführungskomponente wenigstens ein, vorzugsweise jeder Aufteilkörper sich in Richtung der Längsachse im Wesentlichen geradlinig erstrecken.

Eine über den Strömungsquerschnitt gleichmäßige thermische Wechselwirkung des Reaktionsmittels mit der Abgasströmungsvolumen-Aufteilanordnung bzw. auch der Abgasführungskomponente kann dadurch erreicht werden, dass wenigstens zwei, vorzugsweise alle Aufteilkörper zueinander im Wesentlichen konzentrisch angeordnet sind.

Die möglichst gleichmäßige thermische Wechselwirkung kann vorzugsweise weiter dadurch unterstützt werden, dass wenigstens zwei, vorzugsweise alle Aufteilkörper mit im Wesentlichen gleicher Querschnittsgeometrie ausgebildet sind.

Wenn wenigstens ein, vorzugsweise alle Aufteilkörper mit kreisförmiger Querschnittsgeometrie ausgebildet sind, weisen die ineinander geschachtelten bzw. das zentrale Teil-Abgasströmungsvolumen umgebenden Teil-Abgasströmungsvolumina eine im Wesentlichen kreisringartige Querschnittsgeometrie auf, was insbesondere dann, wenn diese über den gesamten Umfang die gleiche radiale Erstreckung aufweisen, eine sehr gleichmäßige thermische Wechselwirkung des Reaktionsmittels mit der Abgasströmungsvolumen-Aufteilanordnung über den gesamten Umfang ermöglicht.

Um in dem Aufteil-Längenbereich die durch die Abgasströmungsvolumen-Aufteilanordnung bereitgestellte Vergrößerung der Oberfläche möglichst effizient nutzen zu können, wird vorgeschlagen, dass in einem stromabwärtigen Endbereich der Abgasströmungsvolumen-Aufteilanordnung alle Aufteilkörper im Wesentlichen im gleichen axialen Bereich enden.

Bei einer hinsichtlich der Strömungsführung bzw. des Strömungswiderstands beim Eintritt von Abgas bzw. Reaktionsmittel in den Aufteil-Längenbereich vorteilhaften Ausgestaltung können in einem stromaufwärtigen Endbereich der Abgasströmungsvolumen-Aufteilanordnung wenigstens zwei, vorzugsweise alle Aufteilkörper in unterschiedlichen axialen Bereichen enden.

Hierzu kann vorgesehen sein, dass wenigstens ein, vorzugsweise jeder bezüglich eines anderen Aufteilkörpers weiter radial außen positionierte Aufteilkörper in Richtung stromaufwärts eine größere Erstreckungslänge aufweist, als der andere Aufteilkörper.

Zum weiteren Unterstützen der Durchmischung von Abgas und Reaktionsmittel und insbesondere auch zum möglichst gleichmäßigen Verteilen des durch die Reaktionsmittelabgabeeinheit in das Abgasströmungsvolumen abgegebenen Reaktionsmittels über den gesamten Strömungsquerschnitt wird vorgeschlagen, dass stromabwärts der Reaktionsmittelabgabeeinheit und stromaufwärts der Abgasströmungsvolumen-Aufteilanordnung wenigstens eine Abgas/Reaktionsmittel-Mischeinheit angeordnet ist. Eine derartige Abgas/Reaktionsmittel-Mischeinheit kann beispielsweise eine Mehrzahl von in Umfangsrichtung aufeinanderfolgenden, schaufelartigen Strömungsablenkelementen umfassen, welche in dem die Abgas/Reaktionsmittel-Mischeinheit durchströmenden Gemisch aus Abgas und Reaktionsmittel eine Drallströmung und damit eine die Durchmischung unterstützende Verwirbelung erzeugen.

Die Erfindung betrifft ferner eine Abgasanlage für eine Brennkraftmaschine, umfassend eine erfindungsgemäß aufgebaute Mischanordnung und stromabwärts der Mischanordnung wenigstens eine Abgasbehandlungseinheit, vorzugsweise SCR-Katalysator.

Die vorliegende Erfindung wird nachfolgend mit Bezug auf die beiliegenden Figuren detailliert beschrieben. Es zeigt:
- Fig. 1: eine prinzipartige Darstellung einer Abgasanlage für eine Brennkraftmaschine in einem Fahrzeug;
- Fig. 2: den Abschnitt II in Fig. 1 im Detail;
- Fig. 3: einen Querschnitt durch den in Fig. 2 gezeigten Abschnitt einer Abgasanlage, geschnitten längs einer Linie III-III in Fig. 2.

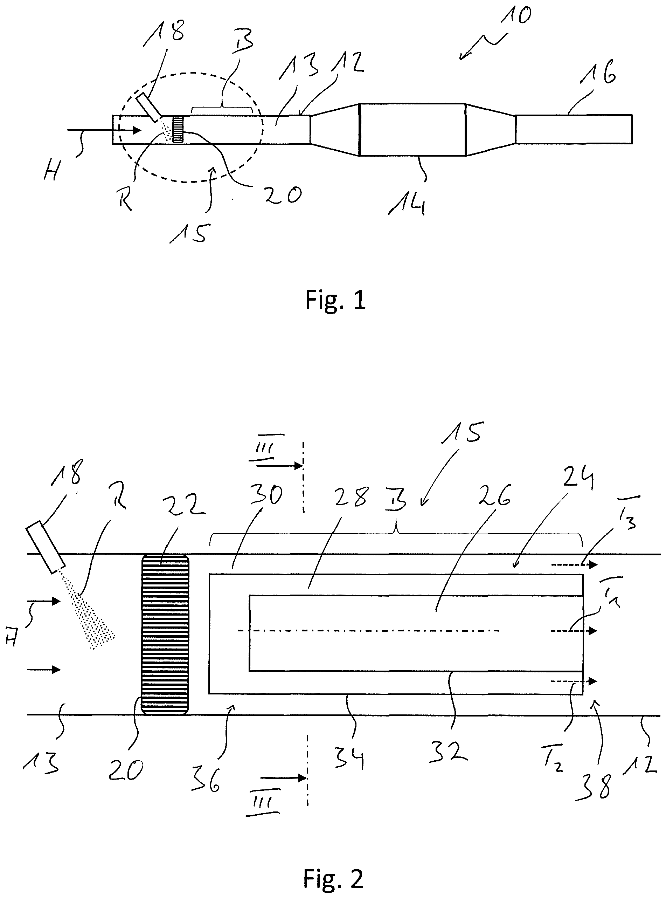

In Fig. 1 ist eine Abgasanlage für eine Brennkraftmaschine beispielsweise in einem Fahrzeug allgemein mit 10 bezeichnet. Die Abgasanlage 10 weist in einem stromaufwärtigen Bereich eine beispielsweise rohrartig ausgebildete Abgasführungskomponente 12. An diese schließt eine Abgasbehandlungseinheit 14, beispielsweise SCR-Katalysator oder dergleichen, an. Auf die Abgasbehandlungseinheit 14 folgt eine weitere beispielsweise rohrartige Abgasführungskomponente 16, über welche das Abgas beispielsweise zu einem Schalldämpfer weitergeleitet werden kann.

Das von einer Brennkraftmaschine ausgestoßene Abgas A strömt in einer Abgas-Hauptströmungsrichtung H, welche einer in Fig. 2 erkennbaren Erstreckungsrichtung einer Längsachse L der rohrartigen Abgasführungskomponente 12 entspricht, in Richtung auf die Abgasbehandlungseinheit 14 zu. Vermittels einer allgemein als Injektor bezeichneten Reaktionsmittelabgabeeinheit 18 wird ein Reaktionsmittel R, beispielsweise eine Harnstoff/Wasser-Lösung, in das im Wesentlichen in der Abgas-Hauptströmungsrichtung H strömende Abgas A eingespritzt.

Stromabwärts der Reaktionsmittelabgabeeinheit 18 ist eine allgemein mit 20 bezeichnete Abgas/Reaktionsmittel-Mischeinheit angeordnet. Diese kann eine Mehrzahl von in Fig. 2 prinzipartig dargestellten, schaufelartig ausgebildeten Strömungsablenkelementen 22 umfassen, welche dem grundsätzlich in der Abgas-Hauptströmungsrichtung H strömenden Abgas A eine Drallströmung verleiht und dadurch zu einer verstärkten Verwirbelung von Abgas und in dieses eingespritztem Reaktionsmittel R sorgt.

Stromabwärts der Abgas/Reaktionsmittel-Mischeinheit 20 ist eine allgemein mit 24 bezeichnete Abgasströmungsvolumen-Aufteilanordnung vorgesehen. Diese teilt in einem Aufteil-Längenbereich B ein in der Abgasführungskomponente 12 bereitgestelltes Abgasströmungsvolumen 13 in eine Mehrzahl von in Richtung stromaufwärts und in Richtung stromabwärts zur Durchströmung offene Teil-Abgasströmungsvolumina 26, 28, 30 auf. Hierzu weist die Abgasströmungsvolumen-Aufteilanordnung 24 im dargestellten Ausgestaltungsbeispiel zwei rohrartige Aufteilkörper 32, 34 auf, welche, ebenso wie die rohrartige Abgasführungskomponente 12, zumindest im Aufteil-Längenbereich B in Richtung der Längsachse L im Wesentlichen geradlinig langgestreckt sind.

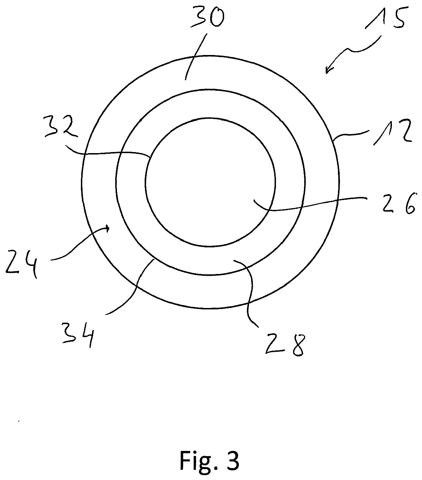

Die rohrartigen Aufteilkörper 32, 34 können, ebenso wie die Abgasführungskomponente 12, zumindest im Aufteil-Längenbereich B eine im Wesentlichen kreisförmige Querschnittsgeometrie aufweisen und, wie dies in Fig. 3 auch zu erkennen ist, zueinander und zur Längsachse L konzentrisch angeordnet sein. Dies hat zur Folge, dass das von dem radial innersten Aufteilkörper 32 radial außen umgrenzte zentrale Teil-Abgasströmungsvolumen 26 von den beiden zueinander konzentrischen, ringartigen Teil-Abgasströmungsvolumina 28, 30 umgeben ist. Aufgrund der zueinander konzentrischen Positionierung der Aufteilkörper 32, 34 und der Abgasführungskomponente 12 und aufgrund der Ausgestaltung derselben mit kreisförmiger Querschnittsgeometrie weist das zentrale Teil-Abgasströmungsvolumen 26 eine kreisförmige bzw. kreisscheibenförmige Querschnittsgeometrie auf, und die dieses ringartig umgebenden Teil-Abgasströmungsvolumina 28, 30 weisen eine über den gesamten Umfang derselben im Wesentlichen konstante radiale Abmessung auf.

In Fig. 2 ist zu erkennen, dass die Aufteilkörper 32, 34 der Abgasströmungsvolumen-Aufteilanordnung 24 in einem stromaufwärtigen Endbereich 36 der Abgasströmungsvolumen-Aufteilanordnung 24 in unterschiedlichen axialen Bereichen enden bzw. in Richtung stromaufwärts sich unterschiedlich weit erstrecken. Der radial innerste bzw. weiter radial innen gelegene Aufteilkörper 32 ist kürzer bzw. erstreckt sich weniger weit in Richtung stromaufwärts, als der äußerste bzw. weiter radial außen gelegene Aufteilkörper 34. Diese von radial innen nach radial außen zunehmende Erstreckungslänge der Aufteilkörper in Richtung stromaufwärts unterstützt eine im Wesentlichen gleichmäßige Einströmung von Reaktionsmittel R transportierendem Abgas A in die Teil-Abgasströmungsvolumina 26, 28, 30.

In einem stromabwärtigen Endbereich 38 der Abgasströmungsvolumen-Aufteilanordnung 24 enden vorzugsweise alle Aufteilkörper 32, 34 im gleichen axialen Bereichen, so dass ein im Wesentlichen gleichmäßiges Ausströmen der die jeweiligen Teil-Abgasströmungsvolumina 28, 30, 32 durchströmenden Teilströme T₁, T₂, T₃ des Gemisches aus Abgas A und Reaktionsmittel R erreicht wird und ein einheitlicher Strom aus Abgas A und Reaktionsmittel R in Richtung zu der Abgasbehandlungseinheit 14 weiter strömen kann.

Bei der im Wesentlichen die Abgasführungskomponente 12, die Reaktionsmittelabgabeeinheit 18, die Abgas/Reaktionsmittel-Mischeinheit 20 und die Abgasströmungsvolumen-Aufteilanordnung 24 umfassenden erfindungsgemäß aufgebauten Mischanordnung 15 wird durch die Abgasströmungsvolumen-Aufteilanordnung 24 bzw. die Aufteilkörper 32, 34 derselben in Verbindung mit der im Aufteil-Längenbereich B diese umgebenden Abgasführungskomponente 12 eine große Gesamtoberfläche bereitgestellt, welche im Arbeitsbetrieb einer Brennkraftmaschine von dem Abgas A umströmt wird und somit Wärme von diesem aufnimmt. Die gesamte im Aufteil-Längenbereich B durch die Abgasführungskomponente 12 und die Aufteilkörper 32, 34 bereitgestellte Oberfläche kann somit genutzt werden, um das im Abgas A transportierte und in wesentlichen Teilen noch in Tröpfchenform, also in flüssiger Form, vorliegende Reaktionsmittel R zu erwärmen und zu verdampfen, um dadurch eine effiziente Durchmischung von Abgas A und Reaktionsmittel R stromaufwärts der beispielsweise als SCR-Katalysator ausgebildeten Abgasbehandlungseinheit 14 zu erreichen. Da auf jede Flächeneinheit der so bereitgestellten Gesamtoberfläche in eine vergleichsweise geringe Menge des zu verdampfenden Reaktionsmittels R auftreffen kann und dieser somit Wärme entziehen kann, wird durch die thermische Wechselwirkung der Aufteilkörper 32, 34 bzw. auch der Abgasführungskomponente 12 mit dem Reaktionsmittel R diesen Komponenten nur vergleichsweise wenig Wärme entzogen, so dass auch bei vergleichsweise niedrigen Temperaturen bereits eine effiziente Reaktionsmittelverdampfung gewährleistet ist. Dies wiederum vermindert das Risiko, dass nicht verdampftes, also zunächst noch in flüssiger Form vorliegendes Reaktionsmittel R sich in Bereichen der Abgasanlage 10 niederschlägt und dort Ablagerungen bildet.

Weiter führt die effiziente Verdampfung und dadurch auch Vermischung von Reaktionsmittel mit Abgas dazu, dass in der stromabwärts folgenden Abgasbehandlungseinheit 14 eine effiziente Verringerung des Schadstoffanteils, insbesondere des Stickoxidanteils, im Abgas A erreicht werden kann. Da weiterhin über den gesamten Umfang der Abgasanlage 10 im Aufteil-Längenbereich B eine im Wesentlichen symmetrische Ausgestaltung vorliegt, wird auch eine über den gesamten Strömungsquerschnitt sehr gleichmäßige Durchmischung von Abgas A und Reaktionsmittel R und Abdampfung von Reaktionsmittel R erreicht, was wiederum zur Folge hat, dass in der stromabwärts folgenden Abgasbehandlungseinheit 14 der gesamte zur Verfügung stehende Querschnitt gleichmäßig zur Durchführung der im Allgemeinen katalytischen Abgasreinigungsreaktion genutzt werden kann.

Es ist darauf hinzuweisen, dass selbstverständlich bei der erfindungsgemäß aufgebauten Mischanordnung 15 verschiedenste Variationen vorgenommen werden können. So können beispielsweise mehr als die zwei dargestellte Aufteilkörper 32, 34 ineinander geschachtelt angeordnet sein, wobei vorzugsweise dann weiterhin am stromaufwärtigen Endbereich 36 die Erstreckungslänge der radial gestaffelt liegenden Aufteilkörper in Richtung stromaufwärts von radial innen nach radial außen zunimmt. Weiterhin kann, wenn dies aus strömungstechnischen Gründen vorteilhaft ist, die Querschnittsgeometrie der Aufteilkörper 32, 34 und ggf. auch der Abgasführungskomponente 12 insbesondere im Aufteil-Längenbereich B von der vorangehend beschriebenen und in den Figuren dargestellten, im Wesentlichen kreisrunden Querschnittsgeometrie abweichen und beispielsweise abgeflacht rund, z. B. elliptisch, ausgebildet sein. Auch dabei kann beispielsweise eine Konfiguration erreicht werden, bei welcher bei konzentrischer Anordnung der Aufteilkörper zueinander und auch bezüglich der Abgasführungskomponente die ringartigen Teil-Strömungsvolumina über den gesamten Umfang eine näherungsweise konstante radiale Abmessung aufweisen.

## Patentansprüche

1. Mischanordnung für eine Abgasanlage einer Brennkraftmaschine zur Durchmischung von Abgas und Reaktionsmittel, umfassend:
- eine ein Abgasströmungsvolumen (13) umgrenzende, in Richtung einer Längsachse (L) sich erstreckende Abgasführungskomponente (12),
- eine Reaktionsmittelabgabeeinheit (18) zur Abgabe von Reaktionsmittel (R) in das Abgasströmungsvolumen (13),
- eine Abgasströmungsvolumen-Aufteilanordnung (24) mit einer Mehrzahl von in der Abgasführungskomponente (12) ineinander geschachtelt angeordneten, rohrartigen Aufteilkörpern (32, 34), wobei die Abgasströmungsvolumen-Aufteilanordnung (24) das Abgasströmungsvolumen (13) in einem Aufteil-Längenbereich (B) in eine Mehrzahl von Teil-Abgasströmungsvolumina (26, 28, 30) aufteilt, wobei die Mehrzahl von Teil-Abgasströmungsvolumina (26, 28, 30) ein zentrales Teil-Abgasströmungsvolumen (26) und wenigstens ein das zentrale Teil-Abgasströmungsvolumen (26) ringartig umgebendes Teil-Abgasströmungsvolumen (28, 30) umfasst,
**dadurch gekennzeichnet, dass** die Abgasströmungsvolumen-Aufteilanordnung (24) stromabwärts der Reaktionsmittelabgabeeinheit (18) derart angeordnet ist, dass jedes Teil-Abgasströmungsvolumen (26, 28, 30) von einem Teilstrom (T₁, T₂, T₃) eines Gemisches aus Abgas (A) und Reaktionsmittel (R) durchströmbar ist.

2. Mischanordnung nach Anspruch 1, **dadurch gekennzeichnet, dass** die Abgasführungskomponente (12) wenigstens in dem Aufteil-Längenbereich (B) rohrartig ausgebildet ist oder/und sich in Richtung der Längsachse (L) im Wesentlichen geradlinig erstreckt oder/und wenigstens in dem Aufteil-Längenbereich (B) eine im Wesentlichen kreisförmige Querschnittsgeometrie aufweist.

3. Mischanordnung nach Anspruch 1 oder 2, **dadurch gekennzeichnet, dass** wenigstens ein, vorzugsweise jeder Aufteilkörper (32, 34) sich in Richtung der Längsachse (L) im Wesentlichen geradlinig erstreckt.

4. Mischanordnung nach einem der Ansprüche 1-3, **dadurch gekennzeichnet, dass** wenigstens zwei, vorzugsweise alle Aufteilkörper (32, 34) zueinander im Wesentlichen konzentrisch angeordnet sind.

5. Mischanordnung nach einem der Ansprüche 1-4, **dadurch gekennzeichnet, dass** wenigstens zwei, vorzugsweise alle Aufteilkörper (32, 34) mit im Wesentlichen gleicher Querschnittsgeometrie ausgebildet sind.

6. Mischanordnung nach einem der Ansprüche 1-5, **dadurch gekennzeichnet, dass** wenigstens ein, vorzugsweise alle Aufteilkörper (32, 34) mit im Wesentlichen kreisförmiger Querschnittsgeometrie ausgebildet sind.

7. Mischanordnung nach einem der Ansprüche 1-6, **dadurch gekennzeichnet, dass** in einem stromabwärtigen Endbereich (38) der Abgasströmungsvolumen-Aufteilanordnung (24) alle Aufteilkörper (32, 34) im Wesentlichen im gleichen axialen Bereich enden.

8. Mischanordnung nach einem der Ansprüche 1-7, **dadurch gekennzeichnet, dass** in einem stromaufwärtigen Endbereich (36) der Abgasströmungsvolumen-Aufteilanordnung (24) wenigstens zwei, vorzugsweise alle Aufteilkörper (32, 34) in unterschiedlichen axialen Bereichen enden.

9. Mischanordnung nach Anspruch 8, **dadurch gekennzeichnet, dass** wenigstens ein, vorzugsweise jeder bezüglich eines anderen Aufteilkörpers (30) weiter radial außen positionierte Aufteilkörper (32) in Richtung stromaufwärts eine größere Erstreckungslänge aufweist, als der andere Aufteilkörper (30).

10. Mischanordnung nach einem der Ansprüche 1-9, **dadurch gekennzeichnet, dass** stromabwärts der Reaktionsmittelabgabeeinheit (18) und stromaufwärts der Abgasströmungsvolumen-Aufteilanordnung (24) wenigstens eine Abgas/Reaktionsmittel-Mischeinheit (20) angeordnet ist.

11. Abgasanlage für eine Brennkraftmaschine, umfassend eine Mischanordnung (15) nach einem der Ansprüche 1-10 und stromabwärts der Mischanordnung (15) wenigstens eine Abgasbehandlungseinheit (14), vorzugsweise SCR-Katalysator.

## Claims

1. A mixing arrangement for an exhaust-gas system of an internal combustion engine for mixing exhaust gas and reactant, comprising:
- an exhaust-gas guiding component (12) which delimits an exhaust-gas flow volume (13) and which extends in the direction of a longitudinal axis (L),
- a reactant dispensing unit (18) for dispensing reactant (R) into the exhaust-gas flow volume (13),
- an exhaust-gas flow volume dividing arrangement (24) with a plurality of tubular dividing bodies (32, 34) which are arranged nested one inside the other, the exhaust-gas flow volume dividing arrangement (24) dividing the exhaust-gas flow volume (13) in a dividing length region (B) into a plurality of partial exhaust-gas flow volumes (26, 28, 30), the plurality of partial exhaust-gas flow volumes (26, 28, 30) comprising a central partial exhaust-gas flow volume (26) and at least one partial exhaust-gas flow volume (28, 30) which surrounds the central partial exhaust-gas flow volume (26) in a ring-like manner,
**characterized in that** the exhaust-gas flow volume dividing arrangement (24) is arranged downstream of the reactant dispensing unit (18) in such a way that a partial flux (T₁, T₂, T₃) of a mixture of exhaust gas (A) and reactant (R) may flow through each partial exhaust-gas flow volume (26, 28, 30).

2. The mixing arrangement as claimed in claim 1, **characterized in that** the exhaust-gas guiding component (12) is of tubular form at least in the dividing length region (B) or/and extends substantially rectilinearly in the direction of the longitudinal axis (L) or/and has a substantially circular cross-sectional geometry at least in the dividing length region (B).

3. The mixing arrangement as claimed in claim 1 or 2, **characterized in that** at least one, preferably each dividing body (32, 34) extends substantially rectilinearly in the direction of the longitudinal axis (L).

4. The mixing arrangement as claimed in one of claims 1-3, **characterized in that** at least two, preferably all of the dividing bodies (32, 34) are arranged substantially concentrically with respect to one another.

5. The mixing arrangement as claimed in one of claims 1-4, **characterized in that** at least two, preferably all of the dividing bodies (32, 34) are formed with substantially the same cross-sectional geometry.

6. The mixing arrangement as claimed in one of claims 1-5, **characterized in that** at least one, preferably all of the dividing bodies (32, 34) are formed with a substantially circular cross-sectional geometry.

7. The mixing arrangement as claimed in one of claims 1-6, **characterized in that**, in a downstream end region (38) of the exhaust-gas flow volume dividing arrangement (24), all of the dividing bodies (32, 34) end substantially in the same axial region.

8. The mixing arrangement as claimed in one of claims 1-7, **characterized in that**, in an upstream end region (36) of the exhaust-gas flow volume dividing arrangement (24), at least two, preferably all of the dividing bodies (32, 34) end in different axial regions.

9. The mixing arrangement as claimed in claim 8, **characterized in that** at least one, preferably each dividing body (32) which is positioned radially further to the outside with respect to another dividing body (30) has a greater extent length in the upstream direction than the other dividing body (30).

10. The mixing arrangement as claimed in one of claims 1-9, **characterized in that** at least one exhaust gas/reactant mixing unit (20) is arranged downstream of the reactant dispensing unit (18) and upstream of the exhaust-gas flow volume dividing arrangement (24).

11. An exhaust-gas system for an internal combustion engine, comprising a mixing arrangement (15) as claimed in one of claims 1-10 and, downstream of the mixing arrangement (15), at least one exhaust-gas treatment unit (14), preferably an SCR catalytic converter.

## Revendications

1. Un dispositif de mélange pour un système des gaz d'échappement d'un moteur à combustion interne pour mélanger les gaz d'échappement et le réactif, comprenant :
- un élément de guidage des gaz d'échappement (12) qui délimite un volume d'écoulement des gaz d'échappement (13) et qui s'étend dans la direction d'un axe longitudinal (L),
- une unité de distribution de réactif (18) pour distribuer le réactif (R) dans le volume d'écoulement des gaz d'échappement (13),
- un dispositif de division du volume d'écoulement des gaz d'échappement (24) avec une pluralité de corps de division tubulaires (32, 34) emboîtés les uns dans les autres, dans lequel le dispositif de division du volume d'écoulement des gaz d'échappement (24) divise le volume d'écoulement des gaz d'échappement (13) dans une zone de longueur de division (B) en une pluralité de volumes partiels d'écoulement des gaz d'échappement (26, 28, 30), dans lequel la pluralité de volumes partiels d'écoulement des gaz d'échappement (26, 28, 30) comprend un volume partiel central d'écoulement des gaz d'échappement (26) et au moins un volume partiel d'écoulement des gaz d'échappement (28, 30) qui entoure le volume partiel central d'écoulement des gaz d'échappement (26) à la manière d'un anneau,
**caractérisé en ce que** le dispositif de division du volume d'écoulement des gaz d'échappement (24) est disposé en aval de l'unité de distribution de réactif (18) de manière à ce qu'un flux partiel (T₁, T₂, T₃) d'un mélange de gaz d'échappement (A) et de réactif (R) puisse s'écouler à travers chaque volume partiel des gaz d'échappement (26, 28, 30).

2. Le dispositif de mélange selon la revendication 1, **caractérisé en ce que** l'élément de guidage des gaz d'échappement (12) est de forme tubulaire au moins dans la zone de longueur de division (B) ou/et s'étend de manière sensiblement rectiligne dans la direction de l'axe longitudinal (L) ou/et a une géométrie de section transversale sensiblement circulaire au moins dans la zone de longueur de division (B).

3. Le dispositif de mélange selon la revendication 1 ou 2, **caractérisé en ce qu'**au moins un, de préférence chaque corps de division (32, 34) s'étend de manière sensiblement rectiligne dans la direction de l'axe longitudinal (L).

4. Le dispositif de mélange selon l'une des revendications 1 à 3, **caractérisé en ce qu'**au moins deux, de préférence tous les corps de division (32, 34) sont disposés de manière sensiblement concentrique l'un par rapport à l'autre.

5. Le dispositif de mélange selon l'une des revendications 1 à 4, **caractérisé en ce qu'**au moins deux, de préférence tous les corps de division (32, 34) sont formés avec une géométrie de section transversale sensiblement la même.

6. Le dispositif de mélange selon l'une des revendications 1 à 5, **caractérisé en ce qu'**au moins un, de préférence tous les corps de division (32, 34) sont formés avec une géométrie de section transversale sensiblement circulaire.

7. Le dispositif de mélange selon l'une des revendications 1 à 6, **caractérisé en ce que**, dans une zone d'extrémité aval (38) du dispositif de division du volume d'écoulement des gaz d'échappement (24), tous les corps de division (32, 34) se terminent sensiblement dans la même zone axiale.

8. Le dispositif de mélange selon l'une des revendications 1 à 7, **caractérisé en ce que**, dans une zone d'extrémité amont (36) du dispositif de division du volume d'écoulement des gaz d'échappement (24), au moins deux, de préférence tous les corps de division (32, 34) se terminent dans des zones axiales différentes.

9. Le dispositif de mélange selon la revendication 8, **caractérisé en ce qu'**au moins un, de préférence chaque corps de division (32) qui est positionné radialement plus à l'extérieur par rapport à un autre corps de division (30) a une longueur d'extension plus grande dans la direction amont que l'autre corps de division (30).

10. Le dispositif de mélange selon l'une des revendications 1 à 9, **caractérisé en ce qu'**au moins une unité de mélange gaz d'échappement/réactif (20) est disposée en aval de l'unité de distribution de réactif (18) et en amont du dispositif de division du volume d'écoulement des gaz d'échappement (24).

11. Un système des gaz d'échappement pour un moteur à combustion interne, comprenant un dispositif de mélange (15) selon l'une des revendications 1 à 10 et, en aval du dispositif de mélange (15), au moins une unité de traitement des gaz d'échappement (14), de préférence un convertisseur catalytique SCR.
